# EUROPÄISCHE PATENTSCHRIFT

(11) **EP 2 088 355 B1**
(45) Veröffentlichungstag und Bekanntmachung des Hinweises auf die Patenterteilung: **03.10.2012**
(21) Anmeldenummer: 09000475.5
(22) Anmeldetag: 15.01.2009
(51) Int. Cl.: F16K 31/53, F16K 31/04

(54) **Betätigungsvorrichtung für ein Ventil oder für eine Armatur**
Actuation device for a valve or a fitting
Dispositif d'actionnement pour une soupape ou une armature

(30) Priorität: 11.02.2008 DE 102008008541
(43) Veröffentlichungstag der Anmeldung: 12.08.2009
(73) Patentinhaber: Areva NP GmbH, 91052 Erlangen (DE)
(72) Erfinder: Kradepohl, Paul, 63571 Gelnhausen (DE)
(74) Vertreter: Tergau & Walkenhorst

(56) Entgegenhaltungen:
- DE-A1- 2 437 778
- DE-B- 1 042 311

## Beschreibung

Die Erfindung betrifft eine Betätigungsvorrichtung für ein Ventil oder eine Armatur mit einem ein Schneckenrad und eine auf einer Schneckenwelle angeordnete Schnecke umfassenden Schneckengetriebe, wobei die Schneckenwelle aus einer Ruhelage axial gegen eine Federanordnung verschiebbar gelagert ist, und wobei eine mechanisch betätigte Bremsvorrichtung mit einer an der Schneckenwelle befestigten Bremsscheibe vorgesehen ist, die die Rotation der Schneckenwelle bremst oder blockiert, sobald die axiale Verschiebung der Schneckenwelle gegenüber der Ruhelage einen vorbestimmten Wert überschreitet.

Aus der DE 24 37 778 A1 ist eine motorisch angetriebene Betätigungsvorrichtung für ein Ventil bekannt. Bei dieser Betätigungsvorrichtung treibt ein Motor eine Schneckenwelle eines Schneckengetriebes an. An der Schneckenwelle ist eine mit einem oder mehreren Schraubengängen versehene Schnecke angeordnet, in die ein schräg verzahntes Zahnrad, das sogenannte Schneckenrad, eingreift. Das Schneckenrad sitzt auf einer Welle, die senkrecht zur Schneckenwelle ausgerichtet ist, und die ihrerseits mit einem drehbaren Bedienelement, z. B. einer Spindel, eines Ventils oder einer Armatur in Verbindung steht. Die Schneckenwelle ist aus einer Ruhelage in ihrer Axialrichtung gegen eine Federanordnung verschiebbar gelagert. Bei der Betätigung des Ventils oder der Armatur verschiebt sich die Schneckenwelle daher in Abhängigkeit von dem auf das Schneckenrad übertragenen Drehmoment. Über einen von der axialen Auslenkung der Schneckenwelle angesteuerten Endlagenschalter kann auf diese Weise eine drehmomentabhängige Abschaltung des Antriebsmotors verwirklicht sein.

Für den Fall, dass die so ausgelöste Abschaltung des Antriebsmotors fehlschlägt, weist die Betätigungsvorrichtung gemäß der DE 24 37 778 A1 eine im Bedarfsfall auf die Schneckenwelle einwirkende und deren Rotation blockierende Bremsvorrichtung auf. Dazu ist an einem der beiden Enden der Schneckenwelle eine mit ihr rotierende Bremsscheibe angeordnet, die sich bei der in Folge der Drehmomentreaktion bewirkten axialen Auslenkung der Schneckenwelle zunächst auf einen ihr gegenüberliegenden, fest stehenden Bremsanschlag zubewegt und schließlich in diesen eingreift. Durch den einsetzenden Reibschluss wird die weitere Rotation der Schneckenwelle blockiert. Damit ist insgesamt auch bei Versagen der Antriebsabschaltung das in die Armatur eingeleitete Drehmoment auf einen insbesondere durch die Dimensionierung und Materialauslegung der Systemkomponenten vorgegebenen Maximalwert begrenzt.

Allerdings weist die oben beschriebene Betätigungsvorrichtung im praktischen Dauereinsatz erhebliche Nachteile auf: Beim Erreichen des voreingestellten Solldrehmoments wird die an der Schneckenwelle befestigte Bremsscheibe nämlich nicht nur in Drehrichtung festgehalten und blockiert, sondern sie schlägt zugleich auch in Axialrichtung vergleichsweise hart an den ihr zugeordneten Bremsanschlag an. Dadurch kommt es im Betätigungsfall zu einer nur mit hohem Krafteinsatz wieder lösbaren "Verklemmung" zwischen Bremsscheibe und Bremsanschlag, Diesem Problem wird in der DE 24 37 778 A1 durch den Vorschlag begegnet, die Bremsscheibe derart mit einem freien Drehwinkel an der Schneckenwelle zu befestigen, dass sie relativ zu dieser eine beispielsweise auf eine Viertelumdrehung eingeschränkte Bewegungsfreiheit um ihre eigene Achse besitzt. Damit soll bei der Lösung der zuvor betätigten Bremsvorrichtung der Antriebsmotor zunächst frei und ungehindert anlaufen und gewissermaßen "Schwung holen", bevor er die Bremsscheibe mitnimmt und vom Bremsanschlag löst. Da der "Freilauf" zwischen Bremsscheibe und Schneckenwelle nicht durch entsprechende axiale Lager gewährleistet wird, ist das beabsichtigte Funktionsprinzip aber nicht gewährleistet.

Darüberhinaus verlangt das direkte Wirkungsprinzip dieser Bremsvorrichtung vergleichsweise hohe Bremskräfte, die konstruktionsbedingt zu ungleichförmiger Bremswirkung, ungenügender Drehmomentbegrenzung, unzureichender Einstellgenauigkeit und zu hohem Verschleiß der im Kraft- und Torsionsfluss liegenden Teile führen können. Eine Beeinträchtigung der Armaturenbetätigung durch Rückwirkung der Drehmomentbegrenzungseinrichtung auf die Antriebsfunktion kann wegen der unzureichenden Lagerung der für die Drehmomentbegrenzungseinrichtung benutzten Teile nicht ausgeschlossen werden.

Der Erfindung liegt daher die Aufgabe zugrunde, eine Betätigungsvorrichtung der eingangs genannten Art anzugeben, mit der auslegungsüberschreitende Überlastungen der im Kraft- und Torsionsfluss liegenden Antriebs- und Armaturenteile bei einem unterstellten Abschaltversagen des Antriebsmotors sicher vermieden werden, und die zugleich für einen besonders verschleißarmen Betrieb bei hoher Einstellgenauigkeit ausgelegt ist. Insbesondere soll die Funktionsfähigkeit bei normalen Betriebsbedingungen und bei Betätigung des Antriebs in Gegenrichtung nach einem vorhergehenden Abschaltversagen nicht beeinträchtigt sein.

Diese Aufgabe wird erfindungsgemäß dadurch gelöst, dass die Bremsscheibe axial gegenüber der Schneckenwelle verschiebbar und mit ihr rotierend auf der Schneckenwelle angeordnet ist, wobei die Bremsscheibe Ober einen ihr gegenüberliegenden, nicht rotierenden und durch Betätigung mindestens eines Kipphebels an die Bremsscheibe anpressbaren Reibkörper blockierbar ist, und wobei der Kipphebel seinerseits durch einen an der Schneckenwelle angeordneten Nocken angesteuert ist.

Die Erfindung geht von der Überlegung aus, dass an dem aus dem Stand der Technik bekannten Einsatz einer Reibbremse zur Drehmomentbegrenzung festgehalten werden sollte: Im Gegensatz zu einer Drehmomentbegrenzung durch eine Reib- oder Rutschkupplung, bei der die Gefahr eines Funktionsverlustes des Stellantriebs durch verfrühtes Ansprechen der Kupplung besteht, kann bei einem Einsatz einer Reibbremse durch konstruktive Maßnahmen weitestgehend sichergestellt werden, dass der Stellantrieb im Anforderungsfall vor dem Ansprechen der Drehmomentbegrenzung zunächst seine eigentliche Funktionsaufgabe-das Öffnen oder Schließen eines Ventils - vollständig und zuverlässig erbringt.

Um dabei die aus dem Stand der Technik bekannten Mängel zu vermeiden, ist nunmehr eine konstruktive Trennung von Schub- und Torsionswirkung auf die relevanten Bauteile vorgesehen: Nach wie vor erfolgt die Auslösung des Bremsvor gangs in Abhängigkeit von der axialen Auslenkung der Schneckenwelle. Jedoch wird der im Ansprechfall auf die Bremsscheibe einwirkende Reibkörper oder Bremsbelag nunmehr indirekt angelenkt und über einen Kipphebel, der seinerseits von einem an der Schneckenwelle angeordneten Schaltnocken betätigt wird, aktiv gegen die Bremsscheibe gedrückt, um den gewünschten Reibschluss zu bewirken. Da die Bremsscheibe zwar mit der Schneckenwelle rotierend an dieser angebracht ist, sich aber in axialer Richtung über eine gewisse Wegstrecke frei auf der Schneckenwelle verschieben lässt, ist die aus dem Stand der Technik bekannte Anschlagwirkung vermieden. Die im Freilauf in Gegenrichtung reibungsfreie Drehbarkeit des Bremsscheibenträgers garantiert dabei das selbständige Lösen der Bremse beim Verfahren der Armatur in Gegenrichtung nach einem vorhergehenden Ansprechen der Bremse und damit deren verschleißfreie Betätigung.

Zweckmäßigerweise läuft die Bremsscheibe zwischen zwei Reibkörpern, die vor Eintritt der Bremsanforderung jeweils in axialer Richtung der Schneckenwelle durch einen Spalt von der Bremsscheibe separiert sind. Die an der Schneckenwelle montierte, mit ihr rotierende Bremsscheibe ist also in der Art einer Sandwichanordnung zwischen den beiden gehäuseseitig montierten, nicht rotierenden Reibkörpern positioniert. Im Anforderungsfall werden die beiden Reibkörper über den vom Schaltnocken auf der Schneckenwelle auslenkten Kipphebel zusammengespannt. Dabei ist die insgesamt wirksame Anpresskraft vorteilhafterweise gleichmäßig auf die beiden Reibkörper und damit die Reibwirkung symmetrisch auf die beiden Seiten der eingespannten Bremsscheibe verteilt.

Vorteilhafterweise ist der Nocken zwischen zwei verstellbaren Anschlägen auf der Schneckenwelle derart verschiebbar gelagert, dass eine nennenswerte Brems-oder Blockwirkung erst dann eintritt, wenn die axiale Verschiebung der Schneckenwelle gegenüber der Ruhelage einen vorbestimmten Wert überschreitet. Erst dann schlägt der Nocken an einem der Anschläge an und verschiebt sich nicht mehr in Axialrichtung, sondern drückt durch seine Formgebung den Kipphebel in die Bremsstellung. Während der ersten Bewegungsphase, bei der das auf , die Armatur einwirkende Drehmoment noch unterhalb des Auslösewerts für die Bremsvorrichtung liegt, schleift die Bremsscheibe allenfalls leicht an einem der beiden ihr gegenüber liegenden Reibkörper oder Bremsbeläge, wenn sich die Schneckenwelle axial in ihrem Lager verschiebt. Aufgrund ihrer eigenen Verschiebbarkeit wird die Bremsscheibe durch vergleichsweise geringfügige, gegenüber den Anpresskräften beim Bremsvorgang vernachlässigbare Schubkräfte in etwa raumfest positioniert gehalten und somit die Auslenkung der Schneckenwelle kompensiert. Zweckmäßigerweise ist daher der mögliche Verschiebeweg der Bremsscheibe auf der Schneckenwelle mindestens so groß wie der maximale axiale Verschiebeweg der Schneckenwelle in ihrem Lager, d. h. gegenüber den feststehenden Komponenten der Betätigungsvorrichtung, insbesondere deren Gehäuse.

Sofern die Verschiebung der Schneckenwelle einen vorbestimmten Auslösewert überschreitet, wird schließlich durch eine entsprechende Formgebung des Nockens der Kipphebel gekippt oder geschwenkt, der dann seinerseits den oder die Reibkörper gegen die Bremsscheibe presst und damit die weitere Drehmomenteinleitung in die Armatur begrenzt. Vorteilhafterweise nimmt bei Überschreiten des Schwell- oder Auslösewertes die Anpresskraft des jeweiligen Reibkörpers an die Bremsscheibe monoton, insbesondere streng monoton, mit der axialen Verschiebung der Schneckenwelle zu. In bevorzugter Ausgestaltung ist auch noch in dieser letzten Bewegungsphase der Schneckenwelle vor ihrem bremsbedingten Stillstand die axiale Verschiebbarkeit der Bremsscheibe auf der Schneckenwelle gewährleistet.

In einer besonders bevorzugten Ausführungsform handelt es sich bei dem jeweiligen Reibkörper um eine parallel zur wellenseitigen Bremsscheibe ausgerichtete Scheibe oder einen Ring. Insbesondere können eine Mehrzahl von mit der Schneckenwelle rotierenden Bremsscheiben und nicht rotierenden, gehäuseseitig befestigten Reibkörpern, insbesondere Ringe oder Scheiben, in alternierender Anordnung axial hintereinander geschaltet sein, die insgesamt eine auch als Mehrscheiben-Bremse bezeichnete Lamellenbremse bilden. Vorteilhafterweise sind dabei die wellenseitigen Bremsscheiben, die die Innenlamellen der Lamellenbremse bilden, starr an einem gemeinsamen inneren Lamellenträger befestigt, der in der Art einer äußeren Hülse oder Nabe drehfest, d. h. mit der Schneckenwelle rotierend, aber axial gegenüber ihr verschiebbar auf der Schneckenwelle angeordnet ist. Somit ist vorzugsweise der gesamte innere Lamellenträger als eine Einheit auf der Schneckenwelle axial verschiebbar.

Für eine bezüglich ihres Umfangs symmetrische Krafteinleitung in die jeweilige Reibscheibe oder in den Reibring bzw. in die äußeren Lamellen sind zweckmäßigerweise mehrere, vorzugsweise drei, gleichmäßig über ihren Umfang verteilt angeordnete Kipphebel vorgesehen, die durch den Nocken simultan betätigt werden.

Welle-Nabe-Verbindungen mit in Längsrichtung verschiebbarer Nabe sind als solche aus dem Stand der Technik bekannt; sie können beispielsweise als sogenannte Keilwellen-Verbindung oder durch den Einsatz von Wellen mit Polygonprofil verwirklicht sein. Alternativ kann der Einsatz einer Passfederverbindung vorgesehen sein, bei der eine von der Welle abstehende längliche, parallel zur Axialrichtung orientierte Passfeder oder ein sonstiger Vorsprung vorschlüssig in eine korrespondierende Nut der umliegenden Nabe eingreift und für diese als Mitnehmer wirkt.

Die mit der Erfindung erzielten Vorteile bestehen insbesondere darin, dass bei einer motorisch angetriebenen Betätigungsvorrichtung für eine Armatur durch die indirekte Betätigung einer vorzugsweise als Lamellenbremse ausführten und mit beweglich gelagerten Bremslamellen versehenen Reibbremse über eine Kipphebel, der seinerseits durch einen Schaltnocken an einer axial verschiebbaren Antriebswelle angesteuert ist, eine konsequente Trennung von Schub- und Torsionswirkung auf die beanspruchten Bauteile verwirklicht ist. Eine derartige Konstruktion führt zu reproduzierbarer Einstellbarkeit und zuverlässiger Bremswirkung mit exakt definierbarer Drehmomentüberhöhung gegenüber dem Auslegungsdrehmoment. Dabei wird insbesondere durch eine Wälzlagerung der sich unter Last drehenden Teile und durch eine Evolventenverzahnung von innerem Lamellenträger und Schneckenwelle vorzeitiger Verschleiß und eine Veränderung der Bremsfunktion auch bei häufiger Betätigung vermieden.

In besonders bevorzugter Weise kommt eine derartige Betätigungsvorrichtung in einer kerntechnischen Anlage zur Betätigung der dort vorhandenen Armaturen und Ventile zum Einsatz. Mit dem neuartigen Design lässt sich insbesondere der in diesem Umfeld zunehmend geförderte Integritäts- und Funktionsfähigkeitsnachweis von Armaturen nach Abschaltversagen ihres elektrischen Stellantriebs leichter als bislang erbringen, wobei zugleich relativ große Motorspannungstoleranzen beherrschbar sind. Dabei kann insbesondere eine Nachrüstung bestehender Armaturen mit bislang konventionellem Antrieb vorgesehen sein, welche aufgrund des modularen, von der eigentlichen Armatur getrennten Aufbaus der Betätigungsvorrichtung einfach und kostengünstig realisierbar ist.

Ein Ausführungsbeispiel der Erfindung wird anhand einer Zeichnung näher erläutert. Darin zeigen:
- Fig. 1: eine stark vereinfachte Prinzipsskizze einer Betätigungsvorrichtung für ein Ventil oder eine Armatur mit einer drehmomentbegrenzenden Bremsvorrichtung, und
- Fig. 2: eine Längsschnitt durch eine derartige Bremsvorrichtung.

Gleiche Teile sind in beiden Figuren mit denselben Bezugszeichen versehen.

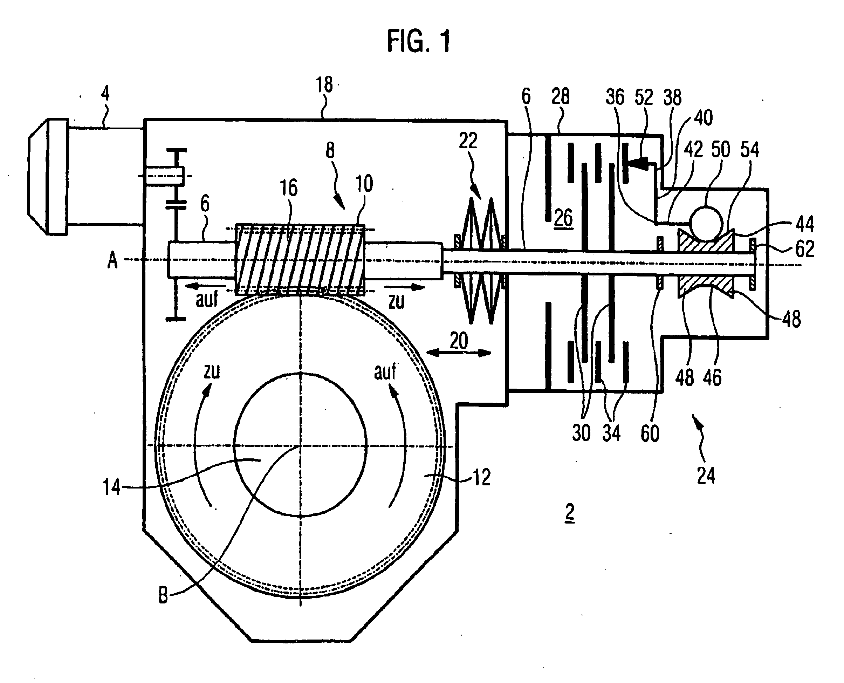

Die in Figur 1 dargestellte Betätigungsvorrichtung 2 ermöglicht ein motorisch angetriebenes Öffnen und Verschließen einer hier nicht dargestellten Armatur oder eines Ventils. Die Betätigungsvorrichtung 2 umfasst dazu einen Elektromotor 4, der eine Schneckenwelle 6 eines Schneckengetriebes 8 antreibt. Mit Hilfe einer auf der Schneckenwelle 6 angeordneten und fest mit ihr verbundenen Schnecke 10 wird die Rotation der Schneckenwelle 6 um ihre Achse A auf ein zugehöriges Schneckenrad 12 übertragen, welches seinerseits auf einer senkrecht zur Schneckenwelle 6 orientierten Welle 14 angeordnet ist und dabei um die Achse B rotiert. Die in den Schraubengang 16 der Schnecke 10 eingreifenden Zähne des als schräg verzahntes Zahnrad ausgeführten Schneckenrades 12 sind in der zeichnerisch stark vereinfachten Figur 1 nicht dargestellt. Mit dem Schneckengetriebe 8 ist über die Richtungsumlenkung der Rotationsbewegung hinaus zugleich eine Getriebeübersetzung bewirkt, die insbesondere von der Ganghöhe bzw. Steigung des Schraubengangs 16 und vom Radius des Schneckrades 12 und der Anzahl der auf ihm angeordneten Zähne abhängt. Die Welle 14 ist mit einer hier nicht sichtbaren Spindel einer Armatur verbunden. Je nach Drehrichtung des Elektromotors wird die Armatur entweder geöffnet oder verschlossen. Im Ausführungsbeispiel bewirkt eine Drehung des Schneckenrades 12 im Uhrzeigersinn das Verschließen der Armatur, bei Drehrichtung im Gegenuhrzeigersinn wird die Armatur geöffnet. Selbstverständlich kann in einer alternativen Ausgestaltung auch der umgekehrte Fall vorgesehen sein. Zum Schutz vor Umgebungseinflüssen, insbesondere vor Verschmutzung, ist das Schneckengetriebe 8 von einem Gehäuse 18 umgeben.

Wenn beispielsweise die Armatur geschlossen werden soll, so lässt sich ihre Spindel typischerweise anfangs verhältnismäßig leicht und dann bis zum Erreichen der Schließstellung zunehmend schwerer drehen. Das heißt, das zur Betätigung erforderliche Drehmoment steigt während des Schließvorganges an. Dabei ist ein gewisses Mindestdrehmoment erforderlich, um ein zuverlässiges und vollständiges Verschließen der Armatur sicherzustellen. Andererseits sollte auch ein bestimmter Maximalwert des Drehmoments nicht überschritten werden, um eine dauerhafte Beschädigung von im Kraft- und Torsionsfluss liegenden Bauteilen zu vermeiden. Daher ist bei der Betätigungsvorrichtung 2 eine vom Auslegungsdrehmoment der Armatur bzw. ihres Spindelantriebs abhängige, drehmonentgesteuerte Abschaltung des Elektromotors 4 vorgesehen.

Zu diesem Zweck ist die Schneckenwelle 6 in Axialrichtung 20 aus einer Ruhelage beidseitig gegen eine Federanordnung 22, z. B. ein Tellerfederpaket, verschiebbar gelagert. Die Federkraft nimmt jeweils mit der Auslenkung bzw. Verschiebung der Schneckenwelle 6 aus der Ruhelage zu. Die Länge der Schnecke 10 ist so bemessen, dass das Schneckenrad 12 auch beim maximalen, durch entsprechende Anschläge begrenzten axialen Verschiebeweg stets in Eingriff mit der Schnecke 10 bleibt. Damit ist die axiale Auslenkung der Schneckenwelle 6 ein Maß für das über die Welle 14 in die Armatur eingebrachte Drehmoment. Insbesondere ist es möglich, die dem Auslegungsdrehmoment der Armatur entsprechende Verschiebung oder Absolutposition der Schneckenwelle 6 empirisch zu bestimmen, etwa durch Messung der Drehmoment-Verschiebeweg-Kennlinie. Über geeignet an der Schneckenwelle 6 angeordnete Schaltnocken, die über zugeordnete Schalter oder Taster den Motorstromkreis unterbrechen, oder beispielsweise auch über eine geeignet einstellbare Lichtschrankenschattung kann dann eine automatische Abschaltung des Elektromotors 4 in Abhängigkeit vom axialen Verschiebeweg der Schneckenwelle 6 und damit in Abhängigkeit vom gewünschten Drehmoment erfolgen.

Allerdings könnte eine derartige automatische Abschaltung des Armaturen-Stellantriebs mittels zugehöriger Endlagenschalter unter ungünstigen Umständen versagen. Um auch in einem solchen Fall von Abschaltversagen der Antriebseinheit das auf die Armatur einwirkende Drehmoment zuverlässig auf einen Maximalwert zu begrenzen, der beispielsweise bei 130% des normalen betrieblichen Auslegungsdrehmoments liegt, weist die Betätigungsvorrichtung 2 eine entsprechend ausgelegte und eingestellte Bremsvorrichtung 24 auf, die in einem solchen Anforderungsfall auf die Schneckenwelle 6 wirkt und diese infolge ihres Bremsmomentes bis zum Stillstand abbremst und schließlich blockiert. Damit ist eine über diesen Maximalwert hinausgehende Drehmomenteinleitung in die Armatur verhindert.

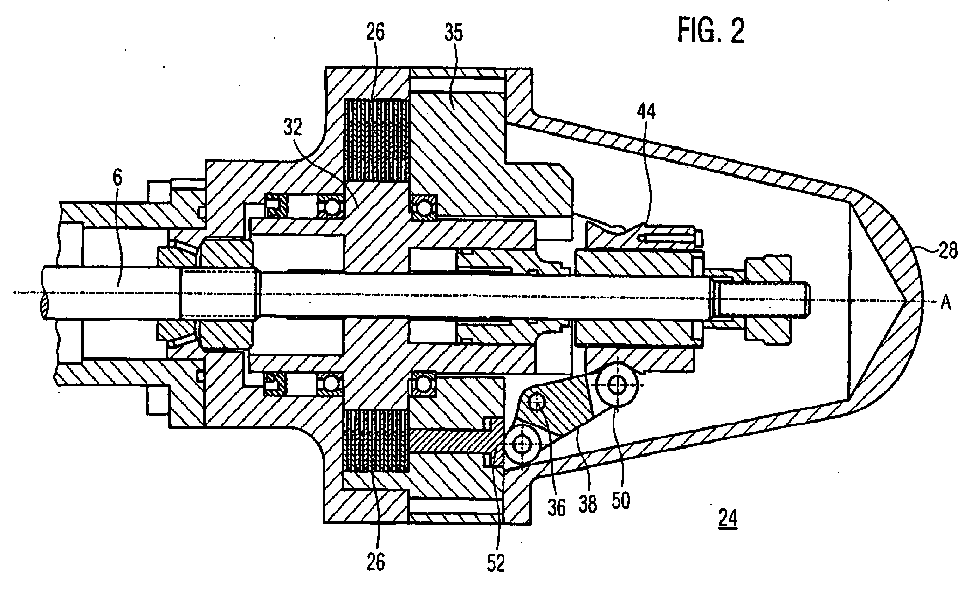

Die Bremsvorrichtung 24 umfasst eine sogenannte Lamellenbremse 26. Auch die Bremsvorrichtung 24 ist zum Schutz vor Umgebungseinflüssen in einem Gehäuse 28 gekapselt, welches sich an das das Schneckengetriebe 8 umgebende Gehäuse 18 anschließt. Die Lamellenbremse 26 umfasst eine Mehrzahl von axial hintereinander an der Schneckenwelle 6 befestigten, radial von ihr abstehenden und gemeinsam mit ihr rotierenden Bremsscheiben 30, die auch als Innenlamellen bezeichnet werden. Wie aus Figur 2 ersichtlich ist, sind die Bremsscheiben 30, jeweils fest an einem auch als innerer Lamellenträger bezeichnete gemeinsamen Trägerelement 32 befestigt, das die Schneckenwelle 6 in der Art einer Hülse umgibt. Die Befestigung des Trägerelementes 32 an der Schneckenwelle 6 ist so konzipiert, dass das Trägerelement 32 mitsamt den Bremsscheiben 30 zwar mit der Schneckenwelle 6 spielfrei rotiert, aber in Axialrichtung 20 mit geringem Kraftaufwand frei verschiebbar ist. Der Verschiebeweg entspricht in seiner Länge in etwa dem Verschiebeweg der Schneckenwelle 6 in ihren Lagern. Damit ist es möglich, dass die Bremsscheiben 30 trotz der während des Betätigungsvorganges infolge der Drehmomentreaktionskraft stattfindenden axialen Verschiebung der Schneckenwelle 6 raumfest positioniert bleiben, sprich ihre Position in Axialrichtung 20 gegenüber dem Gehäuse 28 nicht verändern.

Diese axiale Ausrichtung der wellenseitigen Bremsscheiben 30 ist bewirkt durch ihnen gegenüberliegende, in der Art einer alternierenden Anordnung in die Zwischenräume zwischen den Bremsscheiben 30 eingreifende Reibscheiben 34 oder Reibringe, die im wesentlichen ortsfest und insbesondere nicht rotierend am Gehäuse 28 aufgehängt sind. Die Befestigung erfolgt an einem auch als äußerer Lamellenträger bezeichneten gehäuseseitigen Trägerelement 35. Dabei ist für die auch als Auf3enlamellen bezeichneten Reibscheiben 34 allerdings in Abhängigkeit von einem Verstellmechanismus eine geringfügige Bewegungsfreiheit in Axialrichtung 20 vorgesehen: Im Normalfall, d. h. vor einer Bremsanforderung, besteht zwischen der jeweiligen Bremsscheibe 30 (Innenlamelle) und den beiden ihr gegenüber liegenden Reibscheiben 34 (Außenlamellen) ein kleiner Spalt, so dass die Bremsscheibe 30 ohne nennenswerte Reibung zwischen den Reibscheiben 34 rotieren kann. Im Falle einer Bremsanforderung werden die Reibscheiben 34 dann durch den Verstellmechanismus gegen die Bremsscheiben 30 gedrückt und die Lamellenbremse 26 somit "zugespannt". Der zwischen den Innen- und den Außenlamellen einsetzende Reibschluss bewirkt dann ein entsprechendes Bremsmoment, das dem Antriebsmoment des Elektromotors 4 entgegenwirkt und bei geeigneter Dimensionierung die Schneckenwelle 6 blockiert.

Eine drehmomentabhängige Betätigung der Lamellenbremse 26 ist bei der Betätigungsvorrichtung 2 durch drei gleichartige Kipphebel 38 verwirklicht, die in gleichmäßigen Winkelabständen von 120° um die Schneckenwelle 6 herum angeordnet sind, von denen in Figur 1 und Figur 2 allerdings nur einer sichtbar ist. Alternativ könnten beispielsweise auch lediglich zwei Kipphebel in einer 180°-Anordnung oder auch mehr als drei Kipphebel vorgesehen sein. Der jeweilige Kipphebel 38 ist um einen Drehpunkt 36 drehbar gelagert. Er umfasst einen ersten Hebelarm 40, der auf die Außenlamellen einwirkt, und einen zweiten Hebelarm 42, der durch einen auf der Schneckenwelle 6 angeordneten Nocken 44 angesteuert ist. Die beiden Hebelarme 40, 42 liegen in einer radial zur Schneckenwelle 6 ausgerichteten Ebene. Der Drehpunkt 36 ist ortsfest in Bezug auf das Gehäuse 28. Der Nocken 44 ist in der Art einer zylindersymmetrischen Hülse über die Schneckenwelle 6 geschoben und auf dieser zwischen zwei verstellbaren Anschlägen 60, 62 verschiebbar. Seine Außenkontur ist gemäß Figur 1 durch einen mittleren Zylindermantel und zwei endseitige Kegelstumpfmantelflächen definiert. Der Nocken 44 besitzt damit einen zylindrischen Mittelabschnitt 46 mit konstantem Außenradius, an den sich zu den beiden Enden hin jeweils ein Außenbereich 48 mit linear mit der Axialkoordinate ansteigendem Außenradius anschließt.

Der dem Nocken 44 zugewandte Hebelarm 42 des Kipphebels 38 liegt vor der Bremsbetätigung mit einer an seinem Ende angebrachten Laufrolle 50 (altemativ mit einem Gleitkörper) an dem Mittelabschnitt 46 des Nockens 44 an. Diese Stellung des Kipphebels 38 ist ggf. durch eine auf ihn einwirkende, hier nicht dargestellte Druck- oder Zugfeder unterstützt. Wenn sich die Schneckenwelle 6 infolge einer ansteigenden Drehmomentreaktionskraft axial verschiebt, bleibt der selber auf der Schneckenwelle 6 verschiebbare Nocken 44 zunächst ortsfest, bis er- je nach Bewegungsrichtung der Schneckenwelle 6 - an einem der Anschläge 60, 62 anschlägt. Sofern sich die Schneckenwelle 6 noch weiter verschiebt, wird der Hebelarm 42 in radialer Richtung durch die jeweilige Stellflanke 54 des Nockens 44 nach außen gedrückt. Je weiter sich die Schneckenwelle 6 verschiebt, desto größer ist die Auslenkung des Kipphebels 38 und somit die mit den anderen Hebelarm 40 über einen Stößel 52 auf die Außenlamellen der Lamellenbremse 26 aufgebrachte Bremskraft.

Über die beispielsweise mittels Klemmschrauben oder dergleichen verstellbaren Anschläge 60, 62 kann die Bewegungsfreiheit des Nockens 44 auf der Schneckenwelle 6 und somit der Ansprechzeitpunkt der Lamellenbremse 26 - bezogen auf die axiale Auslenkung der Schneckenwelle 6 - eingestellt werden. Die Steilheit der kegelstumpfartigen Stellflanken 54 definiert die Bremswirkung (eher sanftes oder eher hartes Bremsen).

Zusammengefasst führt die Kombination von Nocken 44, Kipphebel 38, und axial beweglich an einem inneren Lamellenträger aufgehängten inneren Bremslamellen zu besonders gut reproduzierbarer Einstellbarkeit und zuverlässiger Bremswirkung mit wohl definierbarer Drehmomentüberhöhung.

### Bezugszeichenliste

- 2: Betätigungsvorrichtung
- 4: Elektromotor
- 6: Schneckenwelle
- 8: Schneckengetriebe
- 10: Schnecke
- 12: Schneckenrad
- 14: Welle
- 16: Schraubengang
- 18: Gehäuse
- 20: Axialrichtung
- 22: Federanordnung
- 24: Bremsvorrichtung
- 26: Lamellenbremse
- 28: Gehäuse
- 30: Bremsscheibe
- 32: Trägerelement
- 34: Reibscheibe
- 35: Trägerelement
- 36: Drehpunkt
- 38: Kipphebel
- 40,42: Hebelarm
- 44: Nocken
- 46: Mittelabschnitt
- 48: Außenbereich
- 50: Laufrolle
- 52: Stößel
- 54: Stellflanke
- 60,62: Anschlag

## Patentansprüche

1. Betätigungsvorrichtung (2) für ein Ventil oder eine Armatur mit einem ein Schneckenrad (12) und eine auf einer Schneckenwelle (6) angeordnete Schnecke (10) umfassenden Schneckengetriebe (8), wobei die Schneckenwelle (6) aus einer Ruhelage axial gegen eine Federanordnung (22) verschiebbar gelagert ist, und wobei eine mechanisch betätigte Bremsvorrichtung (24) mit einer an der Schneckenwelle (6) befestigten Bremsscheibe (30) vorgesehen ist, die die Rotation der Schneckenwelle (6) bremst oder blockiert, sobald die axiale Verschiebung der Schneckenwelle (6) gegenüber der Ruhelage einen vorbestimmten Wert überschreitet,
**dadurch gekennzeichnet, dass**
die Bremsscheibe (30) axial gegenüber der Schneckenwelle (6) verschiebbar und mit ihr rotierend auf der Schneckenwelle (6) angeordnet ist, wobei die Bremsscheibe (30) über einen ihr gegenüberliegenden, nicht rotierenden und durch Betätigung mindestens eines Kipphebels (38) an die Bremsscheibe (30) anpressbaren Reibkörper (34) blockierbar ist, und wobei der Kipphebel (38) seinerseits durch einen an der Schneckenwelle (6) angeordneten Nocken (44) angesteuert ist.

2. Betätigungsvorrichtung (2) nach Anspruch 1, wobei der Nocken (44) derart zwischen zwei auf der Schneckenwelle (6) angeordneten Anschlägen (60, 62) axial verschiebbar gelagert ist, dass eine nennenswerte Brems- oder Blockierwirkung erst dann eintritt, wenn die axiale Verschiebung der Schneckenwelle (6) gegenüber der Ruhelage einen vorbestimmten Wert überschreitet.

3. Betätigungsvorrichtung (2) nach Anspruch 1 oder 2, wobei der Nocken (44) derart geformt ist, dass die Anpresskraft des Reibkörpers (34) an die Bremsscheibe (30) monoton mit der axialen Verschiebung der Schneckenwelle (6) zunimmt.

4. Betätigungsvorrichtung (2) nach einem der Ansprüche 1 bis 3, wobei der Reibkörper (34) eine parallel zur Bremsscheibe (30) ausgerichtete Scheibe oder ein Ring ist.

5. Betätigungsvorrichtung (2) nach einem der Ansprüche 1 bis 4 mit einer Mehrzahl von in Axialrichtung (20) aufeinanderfolgenden Bremsscheiben (30) und Reibkörpern (34), die insgesamt eine Lamellenbremse (26) bilden.

6. Betätigungsvorrichtung (2) nach Anspruch 5, wobei eine Betätigung der Lamellenbremse (26) über mehrere, vorzugsweise drei, gleichmäßig über ihren Umfang verteilt angeordnete Kipphebel (38) vorgesehen ist.

## Claims

1. An actuating device (2) for a valve or fitting, having a worm gear (8) comprising a worm wheel (12) and a worm (10) arranged on a worm shaft (6), wherein the worm shaft (6) is mounted such that it is axially displaceable, from a rest position, against a spring arrangement (22), and a mechanically actuated brake gear (24) with a brake disk (30) fastened to the worm shaft (6) is provided, which brakes or blocks the rotation of the worm shaft (6) as soon as the axial displacement of the worm shaft (6) out of the rest position exceeds a predefined value,
**characterized in that**
the brake disk (30) is axially displaceable relative to the worm shaft (6) and is rotatably arranged together with the latter on the worm shaft (6), the brake disk (30) being blockable via a friction body (34), which is opposite to the brake disk (30), does not rotate and can be pressed against the brake disk (30) through actuation of at least one rocker lever (38), and the rocker lever (38), for its part, being driven by a cam (44) arranged on the worm shaft (6).

2. The actuating device (2) of claim 1, wherein the cam (44) is mounted in an axially displaceable manner between two stops (60, 62) arranged on the worm shaft (6) in such a way that an appreciable braking or blocking effect will only occur when the axial displacement of the worm shaft (6) out of its rest position exceeds a predefined value.

3. The actuating device (2) of claim 1 or 2, wherein the cam (44) is formed in such a way that the contact pressing force of the friction body (34) against the brake disk (30) increases monotonically with the axial displacement of the worm shaft (6).

4. The actuating device (2) of any of claims 1 to 3, wherein the friction body (34) is a disk or a ring aligned in parallel to the brake disk (30).

5. The actuating device (2) of any of claims 1 to 4, having a plurality of brake disks (30) and friction bodies (34), following each other in axial direction (20), which form together a multiple disk brake (26).

6. The actuating device (2) of claim 5, wherein an actuation of the multiple disk brake (26) is provided via several, preferably three, rocker levers (38), which are uniformly distributed over its periphery.

## Revendications

1. Dispositif d'actionnement (2) pour une soupape ou garniture, ayant un engrenage de vis sans fin (8) comprenant une roue de vis sans fin (12) et une vis sans fin (10) disposées sur un arbre de vis sans fin (6), dans lequel l'arbre de vis sans fin (6) est monté de manière à être déplaçable axialement, à partir d'une position de repos, contre une disposition de ressorts (22), et dans lequel un mécanisme de frein (24) actionné mécaniquement avec un disque de frein (30) fixé à l'arbre de vis sans fin (6) est prévu, qui freine ou bloque la rotation de l'arbre de vis sans fin (6) dès que le déplacement axial de l'arbre de vis sans fin (6) à partir de la position de repos excédera une valeur prédéfinie,
**caractérisé en ce que**
le disque de frein (30) est déplaçable axialement relativement à l'arbre de vis sans fin (6) et est disposé rotativement avec ce dernier sur l'arbre de vis sans fin (6), le disque de frein (30) étant bloquable par un corps de friction (34), qui est opposé au disque de frein (30), ne tourne pas et peut être pressé contre le disque de frein (30) à l'aide de l'actionnement d'au moins un culbuteur (38), et le culbuteur (38), à son tour, étant commandé par une came (44) disposée sur l'arbre de vis sans fin (6).

2. Dispositif d'actionnement (2) selon la revendication 1, dans lequel la came (44) est monté de manière à être déplaçable axialement entre deux butées (60, 62) disposées sur l'arbre de vis sans fin (6) de manière qu'un effet appréciable de freinage ou de blocage ne surviendra que lorsque le déplacement axial de l'arbre de vis sans fin (6) à partir de sa position de repos excède une valeur prédéfinie.

3. Dispositif d'actionnement (2) selon la revendication 1 ou 2, dans lequel la came (44) est formée de manière que la force de pression d'appui du corps de friction (34) contre le disque de frein (30) augmente monotoniquement avec le déplacement axial de l'arbre de vis sans fin (6).

4. Dispositif d'actionnement (2) selon l'une quelconque des revendications 1 à 3, dans lequel le corps de friction (34) est un disque ou un anneau aligné parallèlement au disque de frein (30).

5. Dispositif d'actionnement (2) selon l'une quelconque des revendications 1 à 4, ayant une pluralité de disques de frein (30) et de corps de friction (34), suivant l'un à l'autre en direction axial (20), qui forment ensemble un frein à disques multiples (26).

6. Dispositif d'actionnement (2) selon la revendication 5, dans lequel un actionnement du frein à disques multiples (26) est prévu à l'aide de plusieurs, préférablement trois, culbuteurs (38), qui sont distribués uniformément sur sa périphérie.
